(19) **Europäisches Patentamt**
**European Patent Office**
**Office européen des brevets**

(11) **EP 3 694 176 B1**

(12) **EUROPEAN PATENT SPECIFICATION**

(45) Date of publication and mention
of the grant of the patent:
**20.03.2024 Bulletin 2024/12**

(21) Application number: **20154645.4**

(22) Date of filing: **30.01.2020**

(51) International Patent Classification (IPC):
***G06F 21/36*** (2013.01)   ***G06F 21/57*** (2013.01)
***G06F 21/62*** (2013.01)   ***H04L 9/40*** (2022.01)

(52) Cooperative Patent Classification (CPC):
**H04L 63/10; G06F 21/36; G06F 21/577;**
**H04L 63/083;** H04L 63/1433; H04L 63/1441

(54) **SYSTEM AND METHOD FOR PERFORMING A TASK BASED ON ACCESS RIGHTS DETERMINED FROM A DANGER LEVEL OF THE TASK**

SYSTEM UND VERFAHREN ZUM AUSFÜHREN EINER AUFGABE AUF DER BASIS VON ZUGRIFFSRECHTEN, DIE ANHAND EINES GEFAHRENGRADES DER AUFGABE BESTIMMT WERDEN

SYSTÈME ET PROCÉDÉ DE RÉALISATION D'UNE TÂCHE SUR LA BASE DE DROITS D'ACCÈS DÉTERMINÉS À PARTIR D'UN NIVEAU DE DANGER DE LA TÂCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2019 RU 2019103371**
**14.06.2019 US 201916441109**

(43) Date of publication of application:
**12.08.2020 Bulletin 2020/33**

(73) Proprietor: **AO Kaspersky Lab**
**Moscow 125212 (RU)**

(72) Inventors:
• **TATARINOV, Ivan I.**
**125212 Moscow (RU)**

• **PAVLOV, Nikita A.**
**125212 Moscow (RU)**
• **TIKHOMIROV, Anton V.**
**125212 Moscow (RU)**

(74) Representative: **Chimini, Francesco**
**Jacobacci & Partners S.p.A.**
**Piazza della Vittoria 11**
**25122 Brescia (IT)**

(56) References cited:
**US-A1- 2013 276 125    US-A1- 2015 339 477**
**US-A1- 2017 078 319    US-A1- 2017 161 490**
**US-B1- 9 348 981**

**Description**

**FIELD OF TECHNOLOGY**

The present disclosure relates to the field of computer security, more specifically, to systems and method of providing information security, e.g., based on access rights determined from a danger level of a task.

**BACKGROUND**

The rapid development of computer technologies in the past decade and the widespread use of various computing devices (e.g., personal computers, notebooks, tablets, smartphones, and so on) have become powerful stimulus for using said devices in diverse areas of activities and for a large number and variety of tasks (e.g., Internet surfing, banking, and electronic document transmission, and the like). Most of these activities and/or tasks involve visiting various websites. The more websites a user visits and uses, the more account records he/she needs to create. Ordinarily, the user memorizes the logins and passwords for the most often used websites, and either forgets the others or prefers to save them in one way or another. However, in one scenario, a careless attitude to the saving of logins and passwords of account records may result in these saved logins and passwords being compromised. In another scenario, the website itself and its database of account records may be compromised. In either scenario, hackers can make use of the account records of the user to commit unlawful actions.

Moreover, as the number of computing devices and the volume of software running on these devices have grown, the number of malicious programs has also grown at a rapid pace. At present, a large number and variety of malicious programs exist. Some of these malicious programs steal personal and confidential data from the devices of users (such as logins and passwords, bank account details, electronic documents, and so on). Other malicious programs form so-called botnets using the devices of users. These botnets are formed for launching attacks, such as a DDoS (Distributed Denial of Service) attack, or for sorting through passwords, often by brute force, against other computers or computer networks. Still other malicious programs are used to propose paid content to users through intrusive advertising, paid subscriptions, sending of SMS to toll numbers, and so forth.

Some of the threats described above may be dealt with by special programs, or antiviruses. However, in certain situations, said antiviruses are practically useless. For example, in the case of targeted cyber-attacks on computer systems (APT - advanced persistent threat), and also when the antiviruses are not functioning on the computer systems when the computer systems became infected (for example, they were not installed or were disconnected), the antiviruses are not useful.

For a more reliable protection, along with the above described automation of an antivirus scheme, it is often necessary to utilize the expertise of the user. Utilizing the expertise of the user involves correcting the work of the anti-virus system. The correction may involve making a decision to select one or another way of solving problems and entering data into the system. Then, on the basis of the entered data, the anti-virus system may continue to operate (for example, for problems of detecting unauthorized access, directed cyber-attacks, or execution of unknown programs). For this purpose, one utilizes various approaches to increase security, such as authorization (logins and passwords), determination of user actions, and automated public Turing tests, i.e., an active work by the user with elements of the security system.

US 2015/339477 A1 describes a method and system for creating a risk assessment model by the training of a risk assessment machine learning module. US 2017/078319 A1 describes systems and methods relating to Captcha risk or score technique. US 9 348 981 B1 describes a system and method for generating user authentication challenges based on risk level.

In US2013/276125 A1 a system and a method are provided for generating and serving to a user an animated challenge graphic comprising a challenge character set whose appearance may change over time.

The known automated public Turing tests deal with tasks of determining the presence of a human in systems and the blocking of the automatic performance of critically important tasks. However, they are not resistant to directed cyber-attacks, or to cyber-attacks that include passing the Turing tests. For example, the passing of the Turing test may be by using narrowly specialized automatic algorithms that are created to pass predetermined and well known tests (such as text recognition). The passing of the Turing tests in such an automated manner is possible on account of the static nature of the tests. The cyber criminals have time to study the tests thoroughly and develop algorithms for passing them.

Hence, there is a need for an effective way of protecting information on computing devices.

**SUMMARY**

The present invention is defined by the subject matter of the appended set of claims. Aspects of the disclosure relate to the field of information security, more specifically to systems and methods for performing a task on a computing device based on access rights determined from a danger level of the task. Therefore, the present disclosure is directed to providing authorized access to computer resources and performing critical action for information security on computing devices.

In one example, a method for performing a task on a computing device based on access rights determined from a danger level of the task is implemented in a computer comprising a hardware processor, the method comprising: gathering data characterizing the task for control of the computing device, determining a task danger level using a model for determining the task danger level based on the gathered data, wherein the task danger level characterizes a threat level of the task to an information security of the computing device if the task is performed, generating an automated test, wherein the automated test depends on the determined task danger level and is based on test generating rules, receiving a result of the automated test having being performed by the user, analyzing the received results, and determining access rights for the task in accordance with the analysis, and performing the task in accordance with the determined access rights.

According to one example, a system is provided for performing a task on a computing device based on access rights determined from a danger level of the task, the system comprising a hardware processor configured to: gather data characterizing the task for control of the computing device, determine a task danger level using a model for determining the task danger level based on the gathered data, wherein the task danger level characterizes a threat level of the task to an information security of the computing device if the task is performed, generate an automated test, wherein the automated test depends on the determined task danger level and is based on test generating rules, receive a result of the automated test having being performed by the user, analyze the received results, and determine access rights for the task in accordance with the analysis, and perform the task in accordance with the determined access rights.

In one example, the method further comprises retraining the model used for determining the task danger level based on: the task which was allowed to be performed after the user took the automated test, the access rights with which the task was performed, and consequences on the information security of the computing device upon the task being performed.

In one example, the method further comprises correcting the test generating rules, wherein the correction of the test generating rules is such that a probability of passing, by the user of the computing device, the automated test generated based on the corrected test generating rules is greater than a probability of passing, by the user of the computing device, the automated test generated based on the test generating rules prior to being corrected.

In one example, the method further comprises generating task templates.

In one example, the threat level of the task to the computing device is a numerical value characterizing the probability of harming the information security of the computing device by performing the task, wherein the probability is calculated on the basis of the gathered data characterizing the task, and a similarity of the task to at least one previously specified task for which a threat level to the computing device has been previously determined.

In one example, the greater the threat level is to the computing device, the higher the probability is that the task being analyzed is an element of a targeted cyber-attack. In one example, the test is generated based on at least one of: the task being performed by the user and information being requested by the user on the computing device.

In one example, if a probability of the occurrence of a targeted cyber-attack is above a given threshold value, the test is generated so as to rule out a passing of the test by a machine being used in the targeted cyber-attack, wherein the probability of the occurrence of the targeted cyber-attack constitutes a numerical characteristic expressing a probability that the task being performed on the computing device is performed by a hacker or a machine belonging to the hacker.

In one example, the test is generated such that, for tasks with a higher task danger level, the probability of a test collision is lower, wherein a test collision is at least: a successful passing of the test by a person who is not an authorized user of the computing device, and a successful passing of the test with the aid of a machine.

The method for performing a task on a computing device based on access rights determined from a danger level of the task in accordance with the teachings of the present disclosure improves data security. The improvement is achieved by: gathering data characterizing the task for control of the computing device, determining a task danger level using a model for determining the task danger level based on the gathered data, wherein the task danger level characterizes a threat level of the task to an information security of the computing device if the task is performed, generating an automated test, wherein the automated test depends on the determined task danger level and is based on test generating rules, receiving a result of the automated test having being performed by the user, analyzing the received results, and determining access rights for the task in accordance with the analysis, and performing the task in accordance with the determined access rights.

**BRIEF DESCRIPTION OF THE DRAWINGS**

The accompanying drawings, which are incorporated into and constitute a part of this specification, illustrate one or more example aspects of the present disclosure and, together with the detailed description, serve to explain their principles and implementations.

    **Fig.** 1 is a block diagram illustrating an exemplary system for performing a task on a computing device.
    **Fig.** 2 is a flow diagram illustrating an exemplary method for performing a task on a computing device based on access rights determined from a danger level of the task.
    **Fig.** 3 presents an example of a correctible automated public Turing test.
    **Fig.** 4 presents an example of a general-purpose computer system on which examples of systems and methods disclosed herein can be implemented.

## DETAILED DESCRIPTION

Examples are described herein in the context of a system, method, and a computer program for performing a task on a computing device based on access rights determined from a danger level of the task. Those of ordinary skill in the art will realize that the following description is illustrative only and is not intended to be in any way limiting. Other aspects will readily suggest themselves to those skilled in the art having the benefit of the disclosure. Reference will now be made in detail to implementations of the example aspects as illustrated in the accompanying drawings. The same reference indicators will be used to the extent possible throughout the drawings and the following description to refer to the same or like items.

In order to present the teachings of the present disclosure with clarity, a number of terms and concepts, as used in describing various aspects of the disclosure, are defined herein.

*Automated public Turing test* (CAPTCHA - Completely Automated Public Turing test to tell Computers and Humans Apart) is a computer test used to determine whether the user of a system is: a human or a computer.

*Protected information* - information which is proprietary and is subject to protection in accordance with the requirements of legal documents or the requirements established by the owner of the information.

*Critical user data* - data which can be used (modified, deleted, copied) to inflict significant harm on an individual (the subject of the critical data) or the system on which the individual is working.

*Personal data* - any information pertaining to an individual (the subject of the personal data) who is determined or determinable on the basis of such information, including their last name, first name, middle name, year, month, date and place of birth, address, family, social, and financial status, education, profession, income, or other information.

*Access rule* - a set of rules establishing the order and conditions for access by a subject to protected information and its bearer.

*Access right* - a set of access rules to protected information established by legal documents or by the owner or proprietor of the information.

*Targeted cyber-attack* (APT - Advanced Persistent Threat) - a kind of cyber-attack which is controlled manually, in real time, by a person who is the center of the attack. The goal of the attack is to steal protected information from the information system of a particular company, organization, or governmental service. As important distinguishing features of targeted attacks, one may mention their duration, a lengthy and resource-hungry period of preparation, as well as the use of the targeted attacks, not just technical and computer technologies for their conduct. The comprehensive approach to the design of the attack may include actively influencing people with the aid of psychology and methods of social engineering, together with zero-day exploits against equipment.

Automated public Turing tests are based on a purely human way of solving abstract problems, wherein each user solving these Turing tests will solve them individually, by methods unique only to that user. The methods unique to the user may include the speed of passing the test, the actions performed by the user in passing the test, and the possibility of learning from one's experience and correcting the methods used to pass the test. For example, the most simple instance of such an individual method of solving a test is the shifting of an object on the desktop from one place to another or the making of a selection from among many elements arranged from left to right, and so forth. Thus, these Turing tests make it possible not only to determine whether a person is taking such tests or whether automated machines (computers) are being used by the person to take the tests, but also exactly which one of the people, having previously passed the given tests, is taking the test at the present moment. These principles form the basis for enhancing the information security of computing devices by having a person confirm the critically important tasks being performed on said devices.

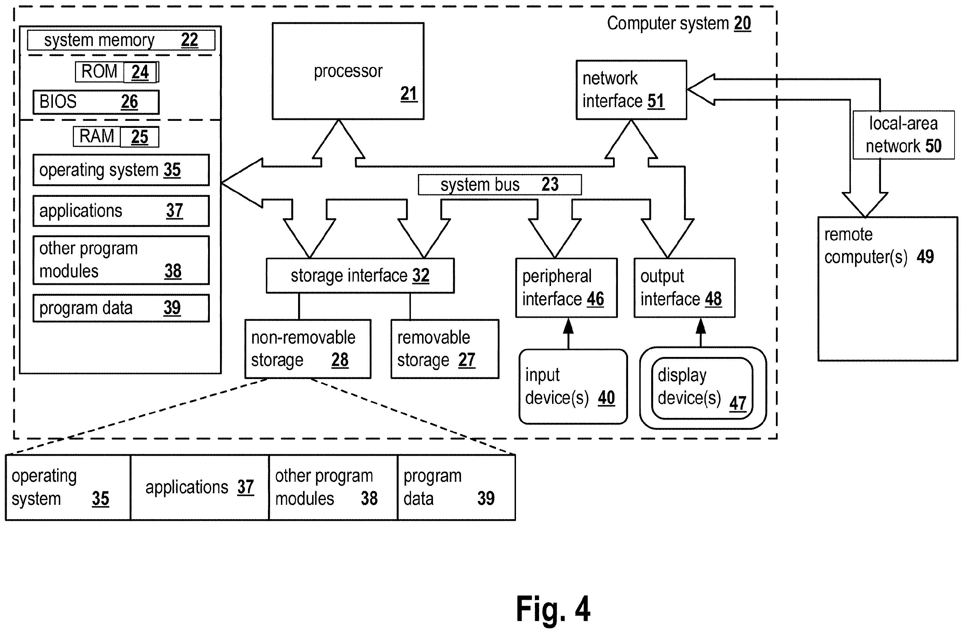

In one example, a system for performing a task on a computing device based on access rights determined from a danger level of the task in accordance with the teachings of the present disclosure includes real-world devices, systems, components, and groups of components realized with the use of hardware such as integrated microcircuits (application-specific integrated circuit, ASIC) or field-programmable gate arrays (FPGA), or, for example, in the form of a combination of software and hardware such as a microprocessor system and set of program instructions, and also on neurosynaptic chips. The functionality of such system modules may be realized solely by hardware, and also in the form of a combination, where some of the functionality of the system modules is realized by software, and some by hardware. In certain examples, some of the modules or all of the modules may be executed on the processor of a general-purpose computer (such as the one shown in Fig. 4). Furthermore, components of the system may be realized either within a single computing device or spread out among several interconnected computing devices.

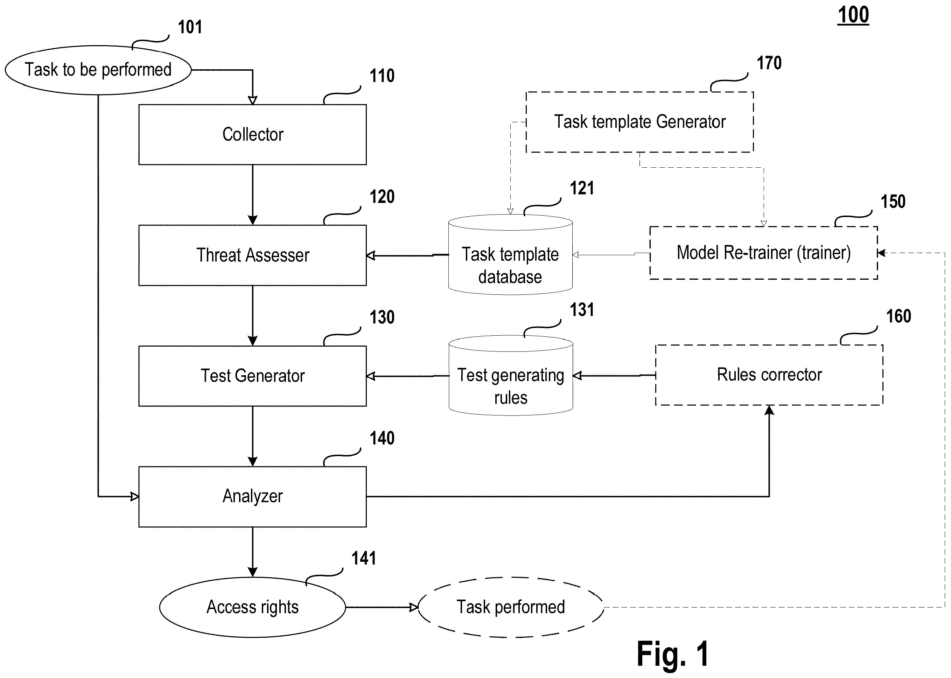

**Fig.** 1 is a block diagram illustrating an exemplary system 100 for performing a task on a computing device. The system 100 for performing a task on a computing device contains a collector 110, a threat assessor 120, a test generator 130, an analyzer 140, a model retrainer 150, a rules corrector 160, a task template generator 170.

The collector 110 is designed to:

    I. gather data characterizing the task for control of the computing device (hereinafter, the task 101); and
II. send the gathered data to the threat assessor 120.

In one example of the system, the task for control of the computing device 101 may include tasks for creating, modifying, deleting or sending data (such as files) through a computer network.

In one example of the system, the performing of the task 101 on the computing device is halted before determining, by the analyzer 140, the access right of the task 101, as described below.

For example, tasks 101 such as the deletion of a file, writing to hard disk or sending data through a computer network, if these tasks 101 are recognized as critical to the security of the computing device (for example, on the basis of statistics of cyber-attacks on different computing devices previously gathered and analyzed by any method known by those ordinarily skilled in the art of computer security), are temporarily blocked from being performed on the computing device until a decision is made by the analyzer 140. For these tasks 101, data which characterizes the tasks 101 is gathered. Then, after the user of the computing device successfully passes the automated public Turing test generated by the test generator 130, permission is granted to perform the aforementioned tasks 101 (e.g., deletion of a file, writing to hard disk or sending data through a computer network) on the computing device in accordance with determined access rights 141. For example, corresponding commands are issued to the operating system, APIs are used to block and unblock the processes carrying out these tasks 101, and so forth.

In yet another example of the system, the gathering of the data characterizing the task 101 includes intercepting the task 101 that is to be performed. The interception is done with the aid of a specialized driver for performing of the task 101.

For example, with the aid of the specialized driver, the API function calls used to perform the task 101 are intercepted. For example, the task of sending data to a computer network, as performed in the Windows operating system, uses the functions *socket, recv, send* and so forth. Then, these functions are intercepted by the network driver.

In yet another example, if the task 101 being performed consists of several partial tasks, different data gathering methods may be used at the same time. For example, the task of installing software consists of partial tasks such as working with the file system for writing of the files being installed to disk, working with memory to allocate large data volumes for performing the operations of unzipping of the files being installed, working with the register to enter the parameters of the software being installed, and so forth. In this case, the file system driver is used to track the performance of such functions as *CreateFile*, *ReadFile*, *WriteFile* and so forth, by installing hooks, the performance of such functions as *HeapAlloc*, *VirtualAlloc*, *CreateFileMapping* and so forth is tracked by analysis of: the software installation logs, the software settings files, and so forth. The parameters influencing the working of the software are monitored.

In yet another example, after the performance of the functions has been intercepted as described above, a request is sent to the operating system for temporary cessation or interruption of the performing of the intercepted functions. For example, with the use of splicing technology, a monitored application upon calling a WinAPI function (such as *CreateFile*) at first refers to the monitoring application (such as a driver) and only then does the driver redirect the call of the intercepted function to the operating system for being performed. If the working logic of the driver requires otherwise, then the intercepted function will not be sent to the operating system. In this case, the monitored application, having called the intercepted function, will be sent the necessary data so that the application "considers" the called function to be correctly performed.

In yet another example of the system, the task 101 represents at least:

I. the control of a process being performed in the operating system on the computing device that is responsible for the processing of data critical to information security, including personal or confidential data of the user or a corporation (such as the creation, modification or deletion of files, the installation of software on the computing device, data archiving, and so forth) with which the user is working directly (for example, electronic Microsoft Office documents);

II. the control of a process being performed in the operating system on the given computing device or other computing devices connected to the given device in a computer network as a client-server architecture (for example, the interaction with sites using a browser), in which case the collector 110 and the analyzer 140 may operate on different clients and servers;

III. the control of an application using a graphic interface of the application, including the entering of data by the user or control of the analysis of that data (for example, the task 101 may involve the entering of confidential user data such as login and password with the aid of administrative tools, wherein it is important not only which data are indicated, but also by which interface this task is being performed; in yet another example, information is gathered on which actions in the system were performed by the user, which elements of the graphic interface of the application were used, how was the mouse moved, which buttons were pressed, and so forth); and

IV. changing of the working parameters of the operating system (for example, control of the administrative rights and the access rights of applications and users, and so forth), including changing the operating system mode (i.e., how the operating system responds to actions being performed by the users and the applications working in the operating system, such as the control of access rights 141 and so forth).

For example, when using a client-server architecture, data is stored in the cloud (on one remote resource), processed on a server (on another remote resource), and sent to the client by the server (a local resource) on demand, from that client. In this case, the tasks 101 are performed on the server, but in order to enable their performance data is requested from the client, so that the collector 110, the threat assessor 120, and the test generator 130 run on the server, while the analyzer 140 runs on the client. On the other hand, the reverse situation is also possible, where the collector 110, the threat assessor 120, and the test generator 130 run on the client, while the analyzer 140 runs on the server. Depending on which operating scheme is chosen in the client-server architecture, the information security will be provided for the client (e.g., in the first instance) or the server (e.g., in the second instance).

In yet another example of the system, the task 101 may represent a collection of several tasks 101. For example, the task of modification of an electronic Adobe PDF document may involve several tasks, e.g., a task for obtaining of the file from a site, a task for unzipping of the required document, and a task for subsequent modification of the unzipped document.

For example, upon intercepting the data, the task 101 is postponed without being performed (e.g., the operating system is given commands to refuse the performance of the task). Only after the user of the computing device successfully passes the automated public Turing test generated by the test generator 130 will the task be performed in accordance with the access rights 141 determined by the analyzer 140. The access rights 141 are determined by the analyzer 140 on the basis of the data gathered by the collector 110.

In yet another example, all the tasks 101 on the computing device are virtualized (i.e., they are performed in a virtual machine) and only after the user successfully passes the Turing test will the tasks 101 be performed, and the changes made by the tasks 101 adopted on the physical device. In certain cases, not all the tasks 101 will be virtualized, but only those with task levels, as determined by the threat assessor, with a value higher than a threshold.

In yet another example, the analyzer 140 is a component of a hypervisor, all the tasks 100 are performed on the virtual machine under control of the hypervisor. In the event that the user does not pass the test generated by the test generator 130, the performance of those tasks 101 is blocked, and the virtual machine returns to the state prior to the launching of the tasks 101.

In yet another example of the system, the analyzer 140 performs the tasks 101 by at least:

I. an interaction with the operating system (for example, through an API provided by the system); and
II. an interaction with processes of the applications processing the tasks 101 (for example, by halting or starting those processes, intruding in the processes, and so forth).

In yet another example of the system, the tasks 101 are at least:

I. tasks involving the creation, modification, or deletion of personal or confidential data of the user on the computing device;
II. tasks involving the sending of data through a computer network;
III. tasks involving the creation and modification of electronic documents;
IV. tasks involving the control of the computing device, which in turn involve at least:

- working with objects of the file system (creation, deletion, modification of files and their attributes),
- working with the rights of objects of the operating system (modification of the access rights of objects of the file system and memory system, including executable processes);
- working with graphic elements of applications; and
- control of the operating modes of equipment of the computing device (for example, working with network equipment, a video system, an audio system, and so forth); and

V. tasks involving the control of software running on the computing device.

For example, the aforementioned tasks 101 may include the creation, modification, or deletion of files, the sending of data through a computer network, the changing of the rights to work with objects of the computing device (for example, with files), the changing of the state of the computing device, the changing of the privileges for working on the computing device, the control of applications with the aid of the graphic interfaces provided by the applications running on the computing device, and so forth.

In yet another example of the system, the data characterizing a task 101 includes at least:

I. parameters and attributes uniquely identifying the given task 101 among other tasks; and
II. parameters and attributes of the computing device necessary to perform the given task 101, including computing resources.

For example, for the task 101 "file deletion" the parameters will be the name of the file destined for deletion, the identifier of the process or the user having initiated that task 101, and so forth.

In yet another example, for the task 101 "sending data through a computer network" the parameters will be a pointer to the data being sent (for example, the check sum of the data being sent), the identifier of the process sending that data, and the address of the recipient of the data being sent. The attributes may be the type of data (for example, text, pictures, media data, executable applications, databases, files, and so forth), the rights for working with the data being sent, and so forth.

The threat assessor 120 is designed to:

I. determine the danger level of the task 101 on the basis of the data received about the task 101, the danger level of a task characterizing the threat level to the information security of the computing device in event of performance of that task; and

II. send the danger level of the task 101 so determined to the test generator 130.

In one example of the system, the threat level of a task to the computing device is a numerical value, characterizing a probability of harming the information security of the computing device by performing the task. The probability is calculated on the basis of the gathered data characterizing the task, and a similarity of the task to at least one previously specified task for which a threat level to the computing device has been previously determined.

The danger level of the task 101 to the computing device may be calculated by any standard method known to those ordinarily skilled in the art of data security, including the Common Vulnerabilities and Exposures (CVE) method of assessing a degree of vulnerability of applications (https://www.cvedetails.com). The CVE method is a method in which the assessment of the degree of vulnerability is a numerical value ranging from 0 (indicating no vulnerability) to 10 (indicating a dangerous level of vulnerability, representing a real danger to the information security), where in certain information security control systems the use of applications is not recommended for a value equal to 4, and is forbidden for a value higher than 8.

In yet another example of the system, the danger level of the following task 101 is determined as a function of the danger level of an earlier task 101.

For example, in a task of installing an application and setting up its operation in the operating system, several independent tasks may be involved, each of which has its own danger level, wherein each successive task given the performance of a preceding task may have a higher danger level than if the preceding task were not performed. For example, the task of installing a user data backup service may involve the following partial tasks: 1) unzipping the installation package, 2) running the installation package, 3) writing the files of the service being installed to a system folder of the operating system, 4) modifying the registry keys of the operating system (including replacing the old values of the keys with new ones, for example, the path to the files of the service being installed), 5) launching the service (loading the service file into memory, transfer of control to the service so loaded, and so forth), 6) connecting to an external address in the computer network, 7) receiving tasks in the computer network (for example, updating). Each of the described steps may have a low danger level, not presenting a danger to the information security of the computing device (for example, step 1) or step 7) in themselves have no influence at all on the information security), but if certain steps are performed one after the other and the results obtained in previous steps are utilized, they may pose a threat to the information security of the computing device (for example, steps 6), 7) and 5) allow the execution of malicious code obtained in a computer network, or the sending of personal or confidential user data to hackers, and consequently the danger level of such a combination of steps will be substantially higher than the danger level of each individual step). Furthermore, the danger level of each step may be influenced not only by the danger level of a previous step, but also by the data which was received in the previous step.

In yet another example of the system, the greater the threat level is to the computing device, the higher the probability is that the task being analyzed may prove to be an element of a targeted cyber-attack. The threat level is determined by the threat assessor 120 on the basis of a task template database 121, which is generated by the model re-trainer 150. The generation of the task template database 121 may include the use of methods of machine learning by the model re-trainer 150. The parameters of the task 101 are compared to indicated templates from the task template database 121 with the help of a previously trained model, generated and updated by the model re-trainer 150. As a result, the similarity of the mentioned task 101 to at least one of the task templates is determined, and the threat level of the task is determined from the degree of similarity to the indicated templates and the threat level of the indicated template.

For example, in the above described instance, the threat level of the task 101 may be determined by the formula:

$$w_j = \sum_{i=1}^{N} s_{ij} w_i \times [m_i(s_{ij})]$$

where

$w_j$     - is the danger level of the j-th task 101,

$N$     - is the number of templates found with the aid of the trained model,

$s_{ij}$     - is the degree of similarity between the j-th task 101 and the i-th task template,

$w_i$     - is the danger level of the i-th task template,

$m_i(s_{ij})$     - is a correction term, taking into count how well the mentioned model has been trained for working with the specified j-th task 101.

For example, the downloading of a file from a computer network at an address not yet ever accessed from the given computing device, the extracting from the downloaded file of an installation package with a name having a high entropy of characters (i.e., with a high probability of being randomly generated), and the running of that file may jointly be considered to be a first task of introducing malicious software in the computing device by methods characteristic of a targeted cyber-attack. On the other hand, the download from the computer network, at an address previously accessed from the given computing device, of an executable application having a name from a list of approved names, and the execution of that application, may be considered to be a second task of installing on the computing device safe (albeit unverified) software. In the first instance, the first task, constituting a great security threat to the computing device, will have a higher task danger level (for example, 0.80). In contrast, the second task may constitute a lower security threat and may be assigned a lower task danger level (for example, 0.30).

In yet another example, the threat level may depend on the time at which task 101 is performed or on a duration of time for performing the task 101.

In yet another example of the system, the danger level of the task is a numerical value, characterizing a probability of the task 101 posing an information security threat to the computing device, and a degree of the threat posed to the information security.

For example, the danger level of a task 101 may lie in the range from 0.0 to 1.0, wherein a danger level of 0.0 indicates that performance of the task 101 does not constitute a threat to the information security of the computing device and a danger level of 1.0 indicates that performance of the task 101 constitutes a threat to the information security of the computing device. For instance, when the danger level is 1.0, for example, confidential user data may be sent through the computer network.

In yet another example of the system, the determination of the task danger level is based on previously determined task templates from a task template database 121, wherein the task template constitutes one or more tasks characterized by parameters and attributes in specified ranges, where the parameters and attributes constitute characteristics which can be used to compare tasks with one another and determine the degree of similarity of a given task and tasks from the template database 121, and each task template from the task template database 121 is matched up with a task danger level.

In one example of the system, the task template database 121 is generated in advance on the basis of accumulated statistics on the tasks 101 performed on various computing devices, and the task templates themselves are created so that the threat levels for all said tasks 101 are properly determined on the basis of said templates.

For example, knowing how the Microsoft Office applications works, it is possible to identify all tasks 101 performed by Microsoft Office applications, and knowing how these applications operate, it is possible to calculate the threat levels for each task 101 of each of these applications and generate corresponding task templates. Then, the generated task templates may be used in order to implement the method of the present disclosure.

In yet another example, the task template database 121 may be generated, in advance, by: knowing how a computing device is constructed, determining which tasks the computing device performs, and identifying the work with which data is critical to the information security of the computing device. The task template database 121 is generated in advance, where each action is assigned its own danger level as a function of the capability to cause harm to the computing device or to the data on the computing device.

For example, suppose it is known from statistics gathered from a large sample of users on working with electronic documents that the working cycle with the electronic documents can be represented by the template [create] → [modify] → ... → [modify] 4 [save/archive] 4 [send by email]. Suppose also it is known, on the basis of other statistics gathered from a large sample of malicious programs, how malicious programs work with electronic documents. A threat level is assigned to certain actions performed with electronic documents depending on how much the given work deviates from the standard work of users obtained on the basis of an analysis of the statistics. Such deviations might involve:

I. creating an electronic document with a name having a high entropy of the characters used in the name, which might indicate its being generated automatically (including a file generated by a malicious program);
II. renaming an electronic document with name attributes as described above;
III. sending an electronic document not by email, but by other methods (for example, through P2P networks);
IV. archiving of an electronic document in different archives; and
V. archiving of an electronic document in which no modifications have been made.

In yet another example, on the basis of previously gathered statistics from various computing devices, including the one being described, as to the working of the users on those computing devices and as to the working of machines (including automatic machines for solving completely automated public Turing tests), the sequence of tasks leading to an identical result, yet using different ways of taking the tests (i.e., by a human or by a machine for automation), is determined by any method known by those ordinarily skilled in the art of data security. For example, the sending of data in a computer network differs, for a user versus for automatic machines, in response time for establishing the connection, the choice of the method of data transfer, the possibility of data encryption, and so forth. Differences in the sequences are utilized to calculate the task danger level by methods for determining similarity. Thus, even if the test happens to be passed successfully, yet it is found that the method of solving it is more typical of automatic machines, the test will be deemed to have been failed (e.g., for certain tasks critically important to information security), and as a result, the task 101, on the confirmation of which the test was generated, will not be performed.

For example, with the aid of an analysis of the movement of a mouse cursor (e.g., analysis of deviation from rectilinear, uniform movements, determination of harmonics, etc.), it is possible to determine that the cursor is being moved by a person, and not an automatic machine.

In yet another example of the system, the task danger level is determined by the degree of similarity of a given task to at least one task template from a task template database 121 in consideration of the task danger level indicated by that template.

For example, the task template describes the writing of data to an electronic Microsoft Word document, while on the computing device a writing of data to an electronic Microsoft Excel document is being done. Based on the fact that the data being written is represented in the same XML form, the writing is being done to electronic documents of the same Microsoft Office software product, and so forth, the threat assessor 120 makes a decision on the similarity of this task and the task of writing to an electronic Microsoft Excel document receives the same task danger level as assigned to the writing to an electronic Microsoft Word document. Any comparing of the tasks 101 may be accomplished using methods known to those ordinarily skilled in the art of data comparison algorithms.

For example, the following comparison algorithm may be used for comparing the tasks 101:

> I. each task is broken down into elementary actions characterized by a minimal number of parameters;
> II. each action is matched up with its own unique hash (in the most simple case, a unique numerical identifier), which together with the above-indicated parameters forms a bytecode (an intermediate code);
> III. for all of the bytecodes so generated, the degree of similarity is determined for each of them with the aid of algorithms for computing an edit distance, such as the Levenshtein distance; and
> IV. if the computed distance does not exceed a given threshold value, the compared tasks 101 are considered to be similar.

In yet another example of the system, the task danger level has a similar nature (e.g., similar technologies, methods of determination and interpretation are used) to the degree of harmfulness of the objects of the computing device, as determined during the performance of an antivirus scan, including methods used to identify targeted cyber-attacks.

For example, when performing an antivirus scan, the antivirus determines the degree of harmfulness of the analyzed objects - the probability that the analyzed object might prove to be harmful (this is especially indicative of heuristic analysis or proactive protection. Depending on how high the degree of harmfulness so determined is, a verdict is pronounced as to whether the analyzed object is safe, suspicious, or malicious. Depending on how many of the analyzed objects on the computing device are respectively safe, suspicious, or malicious (or what value is obtained for the sum total degree of harmfulness of all the analyzed objects), the antivirus makes a decision as to the degree of harmfulness of the computing device as a whole.

In yet another example, the degree of harmfulness of a system may be influenced by the state of the above-described antivirus - the state of the antivirus databases (volume, last update), the antivirus modules connected (for example, the module for heuristic analysis or proactive protection, the rootkit search module, and so on), the presence of files in quarantine, and so forth. Depending on all these factors, the system may have a greater or lesser degree of harmfulness.

In yet another example, it is possible to use methods employed in signature and heuristic analysis of files when scanning the files for harmfulness on the basis of a database of antivirus records.

In yet another example of the system, the task danger level is determined with the aid of a trained module, generated by the model re-trainer 150 on the basis of previously performed tasks 101.

For example, the use of a trained model for determining the danger level of a task 101 makes possible for the task template database 121 to contain not the actual templates of actions, but instead models trained on these templates. In turn, the usage of models trained on the template, increases the speed and accuracy in determining the danger level of actions thereby lowering the demand for computing resources of the computing device. In certain cases, the use of task templates 121 will be less effective than the use of models trained on these templates, especially when the determination of the danger level of a task 101 needs to use a large number of task templates 121 - in this case, it is advisable to employ trained models.

In yet another example, trained models may be used to determine the danger level of a task 101, in the case that the task 101 contains a large number of smaller (and more simple) tasks, which in turn also contain tasks. In this case, a large number of task templates 121 may be used to determine the danger level of the task 101 (and all its partial tasks), which adversely affects the utilization of computing resources of the computing device and the time to calculate the degree of danger of the task 101. For this types of applications, it is advisable to make use of a model trained on the basis of the task templates 121.

The test generator 130 is designed to:

I. generate an automated public Turing test (hereinafter, the test) that depends on the obtained task danger level and is based on specified test generating rules 131; and
II. send the generated test to the analyzer 140.

In one example of the system, the test is generated such that, for tasks with a higher task danger level, the probability of a test collision is lower, wherein a test collision is at least:

I. a successful passing of the test by a person who is not an authorized user of the computing device; and
II. a successful passing of the test with the aid of automation, e.g., using a machine.

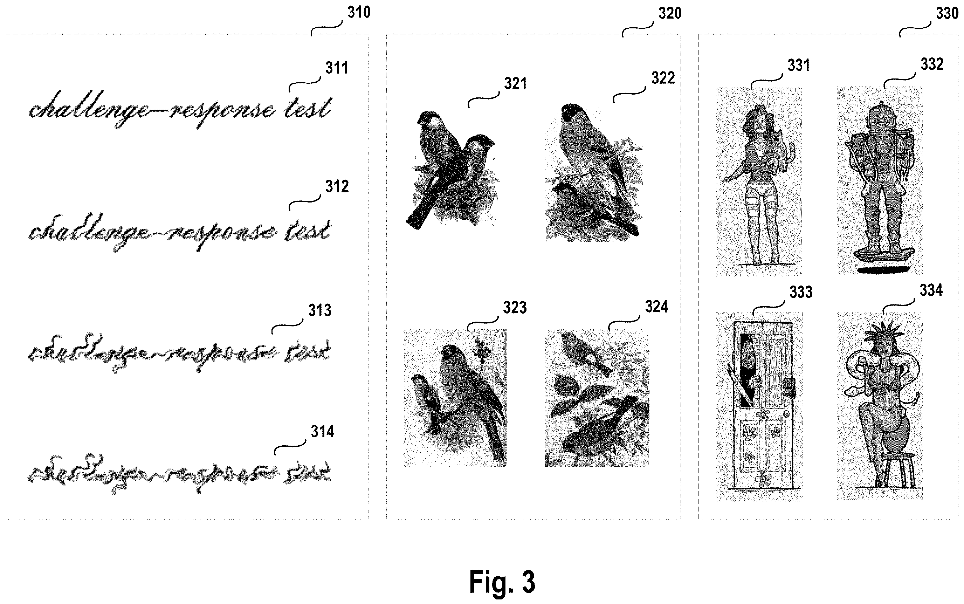

For example, **Fig. 3** presents an example of a correctible automated public Turing test. The complexity of the test will change based on the task danger level. The test for confirming a task 101 with a low danger level (for example, the sending of data in a computer network) might constitute a text recognition problem 312, created with slight distortions relative to a standard text 311, while the test for confirming a task 101 with a high danger level (such as formatting a hard disk) might constitute a text recognition problem 314 created with significant distortions relative to a standard text 311.

In yet another example, the test for confirming a task 101 with a low danger level might constitute a more simple type of problem (text recognition 310), while the test for confirming a task 101 with a high danger level might constitute a more complicated type of problem (e.g., classification of objects 320).

In yet another example of the system, if the probability of the occurrence of a targeted cyber-attack is above a given threshold value, the test is generated so as to rule out a passing of the test by a machine being used in the targeted cyber-attack, wherein the probability of the occurrence of a targeted cyber-attack constitutes a numerical characteristic expressing the probability that the tasks 101 being performed on the computing device are performed not by an authorized user of the computing device, but rather by a hacker or by another machine, i.e., a computer, server, etc. belonging to a hacker, and the actual method for calculating this probability is performed by any method known probability computation techniques (for example, by the probability computation methods used in performing proactive antivirus scans).

For example, machines can solve text recognition problems 310 (such as recognizing a distorted text or "challenge-response test" 311 - 314) with a high probability, and classification problems 320 (such as determining the varieties of bullfinches 321 - 324) with low or medium probability, but are virtually unable to solve problems requiring associative thinking and working with ambiguous rules, as in graphic puzzles 330 (for example, determining films from thematic images 331 - 334).

In yet another example of the system, the test is generated on the basis of data regarding at least:

I. the actions of the user on the computing device, including the classification of user information on the computing device, the applications being launched, and so forth; and
II. information being requested by the user on the computing device, including data obtained from a user query history log in the browser, data obtained from a user profile on social networks, and so forth.

For example, if the user of the computing device quickly and correctly passes all the image recognition tests 312, the following image recognition tests might become more complicated (by introducing greater distortions in the text image) - 313. If the time for successful passing of the test begins to exceed a given duration, further complication of the test will cease 314.

In yet another example, in order to get around automatic classifiers, it is possible to select images such that they can be assigned to several classes. For example, 321 shows two bullfinches of the same kind, while 322 shows one bullfinch of a different kind, as a result the classification can be done either by the number of birds or by their different kinds.

In yet another example of the system, the test being generated may constitute at least:

I. a problem of recognition of images, including at least:

- a problem of text recognition 310,
- a problem of classification of images 320, and
- a problem of semantic puzzles 330;

II. a problem of recognizing audio fragments; and
III. a problem of recognizing media data.

In yet another example of the system, specified test generating rules 131 are established by an authorized user of the computing device (including rules depending on the habits, knowledge, or preferences of that user).

In yet another example, the user on the basis of his or her knowledge and habits may establish the appearance and the content of the test, so that he or she will pass such tests better than other users and machines. For example, if the user of the computing device is an ornithologist, the user may select a problem of classification of kinds of birds 320 as the test, and the complexity of the test will involve increasing the number of classes of images or increasing the similarity of the images to each other.

In one example of the system, the complexity of the test will change, depending on the task danger level. As described above, **Fig. 3** presents an example of a correctible automated public Turing test where the complexity of the test changes based on the task danger level. For example, the change to the complexity of the test may be, at least, as follows:

> **I.** in the event of using test recognition problems the degree of distortion of the test increases with an increasing task danger level (e.g., **Fig. 3:** 311 - 314);
> **II.** in the event of using image classification problems, the number of possible classes increases (e.g., **Fig. 3:** 321 - 324); and
> **III.** additional semantic elements (e.g., **Fig. 3:** 331 - 334) are added to the problem generated with increasing danger level (for example, mathematical tests to solve examples, replacing number problems with text problems, and so forth).

In yet another example of the system, the test generating rights 131 may be at least:

> **I.** ready-made tests, not depending on external parameters;
> **II.** test templates, containing information about the test, on the basis of which the test is generated immediately as a function of external parameters; and
> **III.** logical, lexical or semantic rules of generating tests or the templates of tests.

For example, for classification problems 320, a collection of images may be specified, in advance, from which an image is selected for the test in random fashion.

In yet another example, problems with semantic puzzles may be generated on the basis of a previously specified collection of images, but with changing associative rules. For example, 8 images for a film determination problem are shown in 330, wherein the 8 images are divided into pairs. The images are combinable with each other such that each combined picture contains elements from two different films. If one does not know which element is the key, one cannot correctly solve the problem.

In yet another example of the system, after generating the test with the aid of the test generator 130:

> **I.** the test is presented to the user for solving;
> **II.** data is obtained from the user as to the passing of the test (the solving of the problem presented in the test);
> **III.** parameters are determined describing the passing of the test by the user; and
> **IV.** the obtained results from the passing of the test and the parameters so determined are sent to the analyzer 140.

For example, when passing the test, the test data is gathered as to the time for passing the test and the actions of the user (are helper applications running, which test elements are used first, if such an option exists, and so forth). This data may be used afterwards for correcting the test generating rules and for evaluating the success in performing the test.

In yet another example of the system, the user himself/herself sets up the test generator in advance, i.e., the user specifies the rules which will afterwards be used for generating tests, including:

> **I.** adding images, text, audio fragments, etc., by templates;
> **II.** specifying the complexity of the test; and
> **III.** selecting ways of distorting the test depending on the specified complexity.

The test is then serialized and saved (including encryption) as one of the test generating rules 131.

When generating the test, at first a determination is made as to the user for whom the test needs to be generated (for example, depending on the user's account) and the test is generated by those rules which the particular user has indicated "for themselves".

The analyzer 140 is designed to:

> **I.** determine the access right 141 for the task depending on the result of performance of the generated test by the user; and
> **II.** perform said task 101 with the access rights 141 so determined.

In one example of the system, during the analysis of the success of performance of the test by the user of the computing device, the degree of similarity of that result with a standard result, as determined by the test generator 130 in the test generating step, is determined.

For example, in a test where it is necessary to select several images, a determination is made as to how many images match up with the images from a standard result, and the accuracy of passing the test is determined as the ratio of the number of incorrectly chosen images to the number of correctly chosen images.

In yet another example of the system, test passing parameters obtained by the test generator 130 are used in the analysis of the success of performance of the obtained test by the user of the computing device.

For example, if the user has correctly passed the test, yet spent considerable time on it (more than a specified value), the test will be considered to have been failed.

In yet another example of the system, the success of performance of the test by the user of the computing device is evaluated by calculating the degree of success in performance of the test. The degree of success comprises a numerical value where the minimum value corresponds to the test being definitely failed, and the maximum value corresponds to the test being successfully passed.

For example, instead of a binary evaluation of the success of performance of a test ("pass" or "fail"), the degree of success in passing the test is evaluated (e.g., by any method known to those ordinarily skilled in the art, including methods of making an evaluation of the ratio of incorrect to correct answers, the evaluation being applicable for problems containing possibilities of giving multiple variants of answers). The degree of success may be provided in a range from 0.0 (test definitely failed) to 1.0 (test definitely passed). If the degree of success in passing the test is higher than a specified value (for example, 0.75) the test is considered to have been passed. Note that whether the lower or higher number is assigned to indicate passing versus failing does not affect the method of the present disclosure. That is, it is possible to use a lower evaluation for the degree of success in passing the test (for example, 0.25), such that if the calculated degree of success in passing the test is lower than the specified value, then the test is considered to be failed, but if the calculated degree of success in passing the test is above the lower specified value (0.25), but below the upper specified value (0.75), the success in passing the test is considered to be undetermined and a following test will be generated for the user. Moreover, it is possible to establish even more rigorous lower and upper limits (for example, 0.10 and 0.90 respectively).

In yet another example of the system, the access rights to perform the task 101 are determined depending on the value for the degree of success in performing the test.

For example, if the task involves gaining access to a file, then upon successfully passing the test with a degree of success above a specified value (for example, 0.95) the user of the computing device is granted full rights to work with the file; if it is above another specified value (for example, 0.75), then only rights to reading of data are granted; otherwise, no access to the file will be granted.

In yet another example of the system, the rights of access 141 to perform the task 101 will be right #1, which forbids performing task 101, and right #2, which allows performing task 101.

For example, when deleting a file, this operation may only be either forbidden to be performed or allowed to be performed for a given user. On the other hand, the operation of opening a file may have several access rights 141 - a read right, a write right, a delete right, and so forth.

The model re-trainer 150 is designed to retrain the model used for determining the task danger level as a function of which task 101 was allowed to be performed (after the user has passed the test), along with which rights were granted when the task 101 was performed, and any possible consequences for the security of the computing device that may have been produced as a result of the task 101 being performed in accordance with the granted rights.

In yet another example of the system, the retraining of the model and the generating of the task template database 121 is done based on an analysis of the state of the computing device and of the degree of information security of the database. The degree of information security of the database may be determined by any method known to those ordinarily skilled in the art of database security.

The rules corrector 160 is designed to correct the test generating rule 131 by at least:

- changing the input parameters which are used to generate the rule;
- generating a new rule on the basis of components picked out from old rules (assembly, compilation); and
- generating new rules on the basis of components specified in advance;

such that the probability of a successful passing of that test, generated on the basis of corrected rules 131, by the user of the computing device is greater than that of a test generated on the basis of uncorrected rules 131 (i.e., the test becomes easier for a specific authorized user).

For example, in text recognition problems 310, greater and greater distortion of the text 311 - 313 is used with each successful passing of the test, but not more than a specified value so that the text does not become utterly unrecognizable to the user 314.

In one example of the system, the correcting of the test generating rules 131 involves changing the degree of complexity of the tests as generated by the test generator 130, the degree of complexity of the test being changed in dependence on the degree of success in performing the test as calculated by the analyzer 140.

In yet another example of the system, the degree of complexity of the test is a numerical value characterizing the probability of the test being passed by the user of the computing device.

For example, the degree of complexity of the test may be measured on a scale from 0.0 to 1.0, with 0.0 indicating minimal complexity - the user can successfully pass the test with no additional preparation or additional effort, and 1.0 indicating maximum complexity - successful passing of the test requires considerable time or additional preparation of the user.

In yet another example of the system, provided that, with a minimal degree of test complexity, the generated test is considered to be a standard test, the further complication of the test (i.e., the difference from the standard test) involves at least:

**I.** introducing distortions (graphical in the case of a test for working with images, acoustical in the case of an audio test, and so forth) - 3.11 - 3.14 (for a graphic test); and

**II.** increasing classes for a classification of objects or increasing the similarity of objects of different classes to each other - 3.21 - 3.24.

In yet another example of the system, the correcting of the rules is done with the aim that, after the correction, when new tests are created, the time to pass the newly created tests is reduced for a particular user of the computing device and is the time to pass the newly created tests is increased for other users or for machines. With this goal, the time to pass the test is monitored for the particular user in order to correct the test (for example, make the test easier for the particular user) with the aim of increasing the speed of passing the test for the particular user; the actions of the user on the computing device are monitored and the tasks performed by the user are analyzed in order to select the type and themes of the tests (for example, if the user works for a long time with numbers, a numerical test will be generated; if the user works for a long time with images, a graphic test will be generated; with texts, a textual test, and so forth).

For example, if the user readily recognizes images of birds, then images of rare birds or birds similar to known species will be used more often in the tests.

In yet another example of the system, when each successive test is generated consideration is given to the external parameters of a previously generated test and to the results of passing it, such that the results of passing the new test by a particular user (the user who passed the previously created tests) are better than the results of the user passing the earlier tests. In a particular example, the passing of the generated test is only possible given knowledge of the results of passing the previously created test by the user of the computing device.

For example, the solving of a previously generated test may be a condition for classification of the following test, and the classification may not be performed without knowing the condition for the classification.

In yet another example of the system, the test is generated such that it can only be passed by a machine, and not by the user of the computing device, i.e., the test is generated on the basis of the results of passing previously generated tests so as to decrease (worsen) the results of passing the new tests. Thus, the passing of such a test will be interpreted, contrary to the method described above, as an indication of a compromising of the computing device by the task 101 and as an indication of a need to forbid the task 101 from being performed. For example, such a scheme might be used for computing devices which can be attacked (for example, with the aid of targeted cyber-attacks) and which serve for an operational determination of the start of an attack (for example, honeypots - a resource which is a lure to hackers), and the above described protection scheme is necessary so that the attack through the "lure" is not able to present a threat to other computing devices connected to the "lure" (for example, a unified local computer network).

For example, a text recognition problem may contain so much distorted text 314 that its recognition is possible only by machines, provided that algorithms are known for distorting a text image when generating the test.

The task template generator 170 is designed to:

**I.** gather data characterizing at least:

- the computing device on which the described task performance system is running;
- the software running on the computing device; and
- the tasks being performed by the running software;

**II.** generate at least one task template on the basis of the data gathered; and

**III.** write the generated task template to the task template database 121.

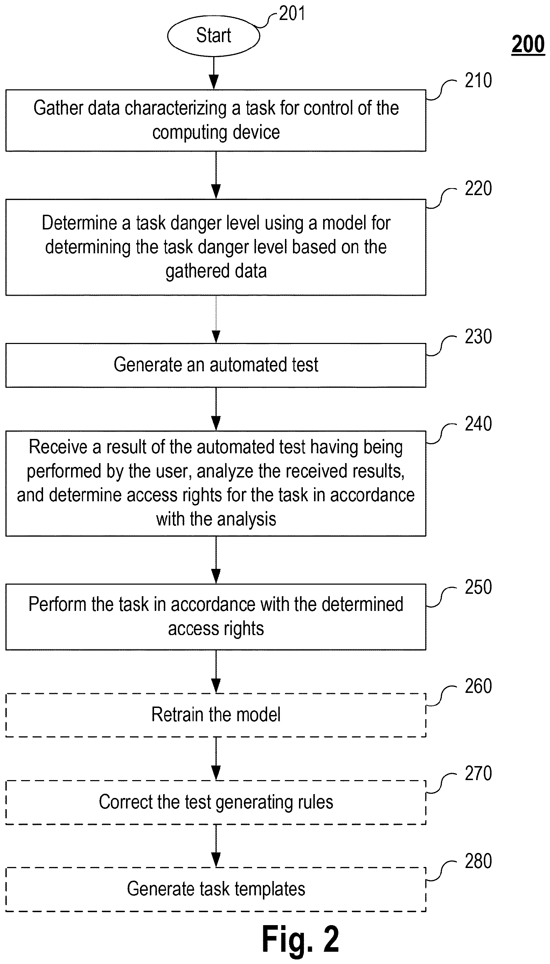

**Fig. 2** is a flow diagram illustrating an exemplary method **200** for performing a task on a computing device based on access rights determined from a danger level of the task.

The method 200 starts in step 201 and proceeds to step 210.

In step 210, method 200, by a collector 110, gathers data characterizing a task for control of the computing device (hereinafter, the task).

In step 220, method 200 determines a task danger level using a model for determining the task danger level based on the gathered data, e.g., data gathered in step 210, wherein the task danger level characterizes a threat level to an information security of the computing device if the task is performed.

In step 230, method 200 generates an automated test, e.g., a public Turing test, wherein the automated test depends on the determined task danger level and is based on test generating rules. For example, the task generating rules determined in step 220 may be used along with test generating rules, e.g., as shown in 131.

In step 240, method 200 receives a result of the automated test having being performed by the user, analyzes the received results, and determines access rights for the task in accordance with the analysis. For example, depending on the result of the test (passed/failed, level of passing/failing, etc.), the access rights for performing the task, e.g., task 101, are determined.

In step 250, method 200 performs the task in accordance with the determined access rights. For example, if the user failed the automated test, no access rights might have been granted. In another example, if the user passed the automated test might have been granted based on how well the user performed on the automated test.

In optional step 260, method 200 retrains the model used for determining the task danger level based on: the task which was allowed to be performed after the user took the automated test, , the access rights with which the task was performed, and consequences on the information security of the computing device upon the task being performed.

In optional step 270, method 200 corrects the test generating rules, wherein the correction of the test generating rules is such that a probability of passing, by the user of the computing device, the automated test generated based on the corrected test generating rules is greater than a probability of passing, by the user of the computing device, the automated test generated based on the test generating rules prior to being corrected.

In optional step 280, method 200 generates task templates.

In one example, the generating of the task templates comprises:

- gathering data characterizing at least: the computing device on which the described task performance system is running; the software running on the computing device; and the tasks being performed by the software that is running on the computing device;
- generating at least one task template on the basis of the gathered data;
- writing the generated task template in a task template database, e.g., database 121.

In one example, the threat level of a task to the computing device is a numerical value, characterizing a probability of harming the information security of the computing device by performing the task. The probability is calculated on the basis of the gathered data characterizing the task, and a similarity of the task to at least one previously specified task for which a threat level to the computing device has been previously determined.

In one example, the greater the threat level is to the computing device, the higher the probability is that the task being analyzed may prove to be an element of a targeted cyber-attack.

In one example, the test is generated such that, for tasks with a higher task danger level, the probability of a test collision is lower, wherein a test collision is at least: a successful passing of the test by a person who is not an authorized user of the computing device; and a successful passing of the test with the aid of automation, e.g., using a machine.

In one example of the system, if the probability of the occurrence of a targeted cyber-attack is above a given threshold value, the test is generated so as to rule out a passing of the test by a machine being used in the targeted cyber-attack, wherein the probability of the occurrence of a targeted cyber-attack constitutes a numerical characteristic expressing a probability that the task being performed on the computing device is performed by a hacker or a machine belonging to the hacker, i.e., not by an authorized user of the computing device.

In one example, the test is generated based on at least one of: the task being performed by the user and information being requested by the user on the computing device.

In one example, a system is provided for performing a task on a computing device based on access rights determined from a danger level of the task, the system comprising: a collector 110, a threat assessor 120, a test generator 130, and an analyzer 140. In one example, the system further comprises one or more of: a model re-trainer 150, a rules corrector 160, a task template generator 170. In one example, in step 210, method 200, by the collector 110, gathers data on a task and sends the gathered data to the threat assessor 120. In step 220, method 200, by the threat assessor 120, determines a task danger level for the gathered data and sends the determined task danger level to the test generator 130. In step 230, method 200, by the test generator 130, generates a test for the determined task danger level using test generating rules (e.g., generates public Turing test) and sends the generated test to the analyzer 140. In step 240, method 200, by the analyzer 140, analyzes the user data to determine access rights for the user, wherein the user data includes results from the test having being administered to the user. In other words, the results indicate how well the user performed on the test. In step 250, method 200, by the analyzer 140, performs the task in accordance with the access rights determined in step 240. In optional step 260, method 200, by the model re-trainer 150, retrains the model. In step 270, method 200, by the rules corrector 160, corrects the test generating rules based on the retraining of the model. In step 280, method 200, by the test template generator 170, generates task templates.

**Fig. 4** is a block diagram illustrating a computer system 20 on which examples of systems and methods for performing a task on a computing device based on access rights determined from a danger level of the task may be implemented in accordance with an example. It should be noted that the computer system 20 can correspond to a virtual machine on a computing device, for example, as described earlier, the system, comprising a processor for performing tasks for a computing device based on access rights determined from a danger level of the task, may be deployed on a virtual machine. The computer system 20 can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport™, InfiniBand™, Serial ATA, I2C, and other suitable interconnects. The central processing unit 21 (also referred to as a processor) can include a single or multiple sets of processors having single or multiple cores. The processor 21 may execute one or more computer-executable code implementing the techniques of the present disclosure. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices.

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

Aspects of the present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in **Fig. 4,** above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

**Claims**

1. A method (200) for performing a task on a computing device based on access rights determined from a danger level of the task, the method (200) comprising:

gathering (210) data characterizing the task for control of the computing device;
generating one or more task templates based on the gathered data, wherein each of the one or more task templates comprises one or more tasks **characterized by** parameters and attributes in specified ranges, and wherein the parameters and attributes comprise characteristics which can be used to compare tasks with one another and determine a degree of similarity between tasks, wherein the comparison of tasks comprises, determining elementary actions for each task, generating a bytecode for each elementary action of each task, determining the degrees of similarities among the generated bytecodes of each task;
determining (220) a task danger level using a model for determining the task danger level based on the generated one or more task templates, wherein the task danger level characterizes a threat level of the task to an information security of the computing device if the task is performed, and wherein the task danger level is determined based on the determined degrees of similarity between tasks;
generating (230) an automated test to determine whether the task is has been requested by a human user of the computing device or by a machine, wherein the automated test depends on the determined task danger level and is based on test generating rules (131) and wherein the automated test is generated based on at least one of: the task being performed by the user and information being requested by the user;
receiving (240) a result of the automated test having being performed by the user, analyzing the received results, and determining access rights for the task in accordance with the analysis; and
performing (250) the task in accordance with the determined access rights.

2. The method (200) according to claim 1, further comprising: retraining (260) the model used for determining the task danger level based on: the task which was performed after the user took the automated test, the access rights with which the task was performed, and consequences on the information security of the computing device upon the task being performed.

3. The method (200) according to any of claims 1 to 2, further comprising: correcting (270) the test generating rules (131), wherein the correction of the test generating rules (131) is such that a probability of passing, by the user of the computing device, the automated test generated based on the corrected test generating rules (131) is greater than a probability of passing, by the user of the computing device, the automated test generated based on the test generating rules (131) prior to being corrected.

4. The method (200) according to any of claims 1 to 3, wherein the threat level of the task to the computing device is a numerical value characterizing the probability of harming the information security of the computing device by performing the task, wherein the probability is calculated on the basis of the gathered data characterizing the task, and a similarity of the task to at least one previously specified task for which a threat level to the computing device has been previously determined.

5. The method (200) according to any of claims 1 to 4, wherein the greater the threat level is to the computing device, the higher the probability is that the task being analyzed is an element of a targeted cyber-attack.

6. A system (100) for performing a task on a computing device based on access rights determined from a danger level of the task, comprising:
at least one processor configured to:

   gather (210), by a collector (110), data characterizing the task for control of the computing device;
   generate one or more task templates based on the gathered data, wherein each of the one or more task templates comprises one or more tasks **characterized by** parameters and attributes in specified ranges, and wherein the parameters and attributes comprise characteristics which can be used to compare tasks with one another and determine a degree of similarity between tasks, wherein the comparison of tasks comprises, determining elementary actions for each task, generating a bytecode for each elementary action of each task, determining the degrees of similarities among the generated bytecodes of each task;
   determine (220), by a threat assessor (120), a task danger level using a model for determining the task danger level based on the generated one or more task templates, wherein the task danger level characterizes a threat level of the task to an information security of the computing device if the task is performed, and wherein the task danger level is determined based on the determined degrees of similarity between tasks;
   generate (230), by a test generator (130), an automated test to determine whether the task has been requested by a human user of the computing device or by a machine, wherein the automated test depends on the determined task danger level and is based on test generating rules and wherein the automated test is generated based on at least one of: the task being performed by the user and information being requested by the user;
   by an analyzer (140), receive (240) a result of the automated test having being performed by the user, analyze the received results, and determine access rights for the task in accordance with the analysis; and
   perform (250), by the analyzer (140), the task in accordance with the determined access rights (140).

7. The system (100) according to claim 6, the at least one processor further configured to:
Retraining (260), by a model re-trainer (150), the model used for determining the task danger level based on: the task which was performed after the user took the automated test, the access rights with which the task was performed, and consequences on the information security of the computing device upon the task being performed.

8. The system (100) according to any of claims 6 to 7, the at least one processor further configured to: Correct (270), by a rules corrector (160), the test generating rules (131), wherein the correction of the test generating rules (131) is such that a probability of passing, by the user of the computing device, the automated test generated based on the corrected test generating rules (131) is greater than a probability of passing, by the user of the computing device, the automated test generated based on the test generating rules (131) prior to being corrected.

9. The system (100) according to any of claims 6 to 8, wherein the threat level of the task to the computing device is a numerical value characterizing the probability of harming the information security of the computing device by performing the task, wherein the probability is calculated on the basis of the gathered data characterizing the task, and a similarity of the task to at least one previously specified task for which a threat level to the computing device has been previously determined.

10. The system (100) according to any of claims 6 to 9, wherein the greater the threat level is to the computing device, the higher the probability is that the task being analyzed is an element of a targeted cyber-attack.

**Patentansprüche**

1. Verfahren (200) zum Durchführen einer Aufgabe an einer Computervorrichtung auf Grundlage von Zugangsrechten, welche aus einem Gefahrenniveau der Aufgabe bestimmt werden, wobei das Verfahren (200) umfasst:

Sammeln (210) von Daten, welche die Aufgabe zum Steuern der Computervorrichtung charakterisieren;
Erzeugen von einer oder mehreren Aufgabenvorlagen auf Grundlage der gesammelten Daten, wobei jede aus der einen oder den mehreren Aufgabenvorlagen eine oder mehrere Aufgaben umfasst, welche durch Parameter und Attribute in spezifizierten Bereichen charakterisiert sind, und wobei die Parameter und Attribute Charakteristiken umfassen, welcher verwendet werden können, um Aufgaben miteinander zu vergleichen und einen Ähnlichkeitsgrad zwischen Aufgaben zu bestimmen, wobei das Vergleichen von Aufgaben ein Bestimmen von elementaren Handlungen für jede Aufgabe, ein Erzeugen eines Bytecodes für jede elementare Handlung jeder Aufgabe, ein Bestimmen der Ähnlichkeitsgrade unter den erzeugten Bytecodes jeder Aufgabe umfasst;
Bestimmen (220) eines Aufgaben-Gefahrenniveaus unter Verwendung eines Modells zum Bestimmen des Aufgaben-Gefahrenniveaus auf Grundlage der erzeugten einen oder mehreren Aufgabenvorlagen, wobei das Aufgaben-Gefahrenniveau ein Bedrohungsniveau der Aufgabe für eine Informationssicherheit der Computervorrichtung charakterisiert, wenn die Aufgabe durchgeführt wird, und wobei das Aufgaben-Gefahrenniveau auf Grundlage der bestimmten Ähnlichkeitsgrade zwischen Aufgaben bestimmt wird;
Erzeugen (230) eines automatisierten Tests zum Bestimmen, ob die Aufgabe von einem menschlichen Benutzer der Computervorrichtung oder durch eine Maschine angefragt worden ist, wobei der automatisierte Test von dem bestimmten Aufgaben-Gefahrenniveau abhängt und auf Test-Erzeugungsregeln (131) basiert, und wobei der automatisierte Test auf Grundlage von wenigstens einem erzeugt wird aus: der von dem Benutzer durchgeführten Aufgabe und von dem Benutzer angefragten Informationen;
Empfangen (240) eines Ergebnisses des automatisierten Tests, welcher von dem Benutzer durchgeführt worden ist, Analysieren der empfangenen Ergebnisse und Bestimmen von Zugangsrechten für die Aufgabe gemäß der Analyse; und Durchführen (250) der Aufgabe gemäß den bestimmten Zugangsrechten.

2. Verfahren (200) nach Anspruch 1, ferner umfassend: erneutes Trainieren (260) des Modells, welches für das Bestimmen des Aufgaben-Gefahrenniveaus verwendet wird, auf Grundlage von: der Aufgabe, welche durchgeführt worden ist, nachdem der Benutzer den automatisierten Test vornahm, den Zugangsrechten, mit welchen die Aufgabe durchgeführt wurde, und Konsequenzen auf die Informationssicherheit der Computervorrichtung auf das Durchführen der Aufgabe hin.

3. Verfahren (200) nach einem der Ansprüche 1 bis 2, ferner umfassend: Korrigieren (270) der Test-Erzeugungsregeln (131), wobei das Korrigieren der Test-Erzeugungsregeln (131) derart ist, dass eine Wahrscheinlichkeit eines Bestehens, durch den Benutzer der Computervorrichtung, des automatisierten Tests, welcher auf Grundlage der korrigierten Test-Erzeugungsregeln (131) erzeugt wurde, größer ist als eine Wahrscheinlichkeit eines Bestehens, durch den Benutzer der Computervorrichtung, des automatisierten Tests, welcher auf Grundlage der Test-Erzeugungsregeln (131) erzeugt wurde, bevor er korrigiert wurde.

4. Verfahren (200) nach einem der Ansprüche 1 bis 3, wobei das Bedrohungsniveau der Aufgabe für die Computervorrichtung ein numerischer Wert ist, welcher die Wahrscheinlichkeit eines Verletzens der Informationssicherheit der Computervorrichtung durch Durchführen der Aufgabe charakterisiert, wobei die Wahrscheinlichkeit auf der Grundlage der gesammelten Daten, welche die Aufgabe charakterisieren, sowie einer Ähnlichkeit der Aufgabe mit wenigstens einer zuvor spezifizierten Aufgabe berechnet wird, für welche ein Bedrohungsniveau für die Computervorrichtung zuvor bestimmt worden ist.

5. Verfahren (200) nach einem der Ansprüche 1 bis 4, wobei je größer das Bedrohungsniveau für die Computervorrichtung ist, desto höher die Wahrscheinlichkeit ist, dass die analysierte Aufgabe ein Element einer zielgerichteten Cyber-Attacke ist.

6. System (100) zum Durchführen einer Aufgabe an einer Computervorrichtung auf Grundlage von Zugangsrechten, welche aus einem Gefahrenniveau der Aufgabe bestimmt werden, umfassend:
   wenigstens einen Prozessor, welcher eingerichtet ist zum:

   Sammeln (210), durch ein Sammelelement (110), von Daten, welche die Aufgabe zum Steuern der Computervorrichtung charakterisieren;
   Erzeugen von einer oder mehreren Aufgabenvorlagen auf Grundlage der gesammelten Daten, wobei jede aus der einen oder den mehreren Aufgabenvorlagen eine oder mehrere Aufgaben umfasst, welche durch Parameter und Attribute in spezifizierten Bereichen charakterisiert sind, und wobei die Parameter und Attribute Charakteristiken umfassen, welcher verwendet werden können, um Aufgaben miteinander zu vergleichen und einen Ähnlichkeitsgrad zwischen Aufgaben zu bestimmen, wobei das Vergleichen von Aufgaben ein Bestimmen von elementaren Handlungen für jede Aufgabe, ein Erzeugen eines Bytecodes für jede elementare Handlung jeder Aufgabe, ein Bestimmen der Ähnlichkeitsgrade unter den erzeugten Bytecodes jeder Aufgabe umfasst;
   Bestimmen (220), durch ein Bedrohung-Auswertungselement (120), eines Aufgaben-Gefahrenniveaus unter Verwendung eines Modells zum Bestimmen des Aufgaben-Gefahrenniveaus auf Grundlage der erzeugten einen oder mehreren Aufgabenvorlagen, wobei das Aufgaben-Gefahrenniveau ein Bedrohungsniveau der Aufgabe für eine Informationssicherheit der Computervorrichtung charakterisiert, wenn die Aufgabe durchgeführt wird, und wobei das Aufgaben-Gefahrenniveau auf Grundlage der bestimmten Ähnlichkeitsgrade zwischen Aufgaben bestimmt wird;
Erzeugen (230), durch ein Test-Erzeugungselement (130), eines automatisierten Tests zum Bestimmen, ob die Aufgabe von einem menschlichen Benutzer der Computervorrichtung oder durch eine Maschine angefragt worden ist, wobei der automatisierte Test von dem bestimmten Aufgaben-Gefahrenniveau abhängt und auf Test-Erzeugungsregeln basiert, und wobei der automatisierte Test auf Grundlage von wenigstens einem erzeugt wird aus: der von dem Benutzer durchgeführten Aufgabe und von dem Benutzer angefragten Informationen;
Empfangen (240), durch eine Analyseeinheit (140), eines Ergebnisses des automatisierten Tests, welcher von dem Benutzer durchgeführt worden ist, Analysieren der empfangenen Ergebnisse und Bestimmen von Zugangsrechten für die Aufgabe gemäß der Analyse; und
Durchführen (250), durch die Analyseeinheit (140), der Aufgabe gemäß den bestimmten Zugangsrechten (140).

7. System (100) nach Anspruch 6, wobei der wenigstens eine Prozessor ferner eingerichtet ist zum:
erneuten Trainieren (260), durch ein Einheit (150) für ein erneutes Trainieren eines Modells, des Modells, welches für das Bestimmen des Aufgaben-Gefahrenniveaus verwendet wird, auf Grundlage von: der Aufgabe, welche durchgeführt worden ist, nachdem der Benutzer den automatisierten Test vornahm, den Zugangsrechten, mit welchen die Aufgabe durchgeführt wurde, und Konsequenzen auf die Informationssicherheit der Computervorrichtung auf das Durchführen der Aufgabe hin.

8. System (100) nach einem der Ansprüche 6 bis 7, wobei der wenigstens eine Prozessor ferner eingerichtet ist zum:
Korrigieren (270), durch eine Regel-Korrektureinheit (160), der Test-Erzeugungsregeln (131), wobei das Korrigieren der Test-Erzeugungsregeln (131) derart ist, dass eine Wahrscheinlichkeit eines Bestehens, durch den Benutzer der Computervorrichtung, des automatisierten Tests, welcher auf Grundlage der korrigierten Test-Erzeugungsregeln (131) erzeugt wurde, größer ist als eine Wahrscheinlichkeit eines Bestehens, durch den Benutzer der Computervorrichtung, des automatisierten Tests, welcher auf Grundlage der Test-Erzeugungsregeln (131) erzeugt wurde, bevor er korrigiert wurde.

9. System (100) nach einem der Ansprüche 6 bis 8, wobei das Bedrohungsniveau der Aufgabe für die Computervorrichtung ein numerischer Wert ist, welcher die Wahrscheinlichkeit eines Verletzens der Informationssicherheit der Computervorrichtung durch Durchführen der Aufgabe charakterisiert, wobei die Wahrscheinlichkeit auf der Grundlage der gesammelten Daten, welche die Aufgabe charakterisieren, sowie einer Ähnlichkeit der Aufgabe mit wenigstens einer zuvor spezifizierten Aufgabe berechnet wird, für welche ein Bedrohungsniveau für die Computervorrichtung zuvor bestimmt worden ist.

10. System (100) nach einem der Ansprüche 6 bis 9, wobei je größer das Bedrohungsniveau für die Computervorrichtung ist, desto höher die Wahrscheinlichkeit ist, dass die analysierte Aufgabe ein Element einer zielgerichteten Cyber-Attacke ist.

## Revendications

1. Procédé (200) de réalisation d'une tâche sur un dispositif informatique sur la base de droits d'accès déterminés à partir d'un niveau de danger de la tâche, le procédé (200) comprenant :

la collecte (210) de données caractérisant la tâche de commande du dispositif informatique ;
la génération d'un ou plusieurs gabarits de tâche sur la base des données collectées, où chacun du ou des gabarits de tâche comprend une ou plusieurs tâches **caractérisées par** des paramètres et attributs dans des plages spécifiées, et où les paramètres et attributs comprennent des caractéristiques qui peuvent être utilisées pour comparer des tâches l'une avec l'autre et déterminer un degré de similitude entre des tâches, la comparaison de tâches comprenant la détermination d'actions élémentaires pour chaque tâche, la génération d'un code intermédiaire pour chaque action élémentaire de chaque tâche, la détermination des degrés de similitude parmi les codes intermédiaires générés de chaque tâche ;
la détermination (220) d'un niveau de danger de tâche en utilisant un modèle pour déterminer le niveau de danger de tâche sur la base du ou des gabarits de tâche générés, le niveau de danger de tâche caractérisant un niveau de menace de la tâche pour la sécurité d'une information du dispositif informatique si la tâche est réalisée, et le niveau de danger de tâche étant déterminé sur la base des degrés déterminés de similitude entre des tâches ;
la génération (230) d'un test automatisé pour déterminer si la tâche a été demandée par un utilisateur humain du dispositif informatique ou par une machine, le test automatisé dépendant du niveau de danger de tâche déterminé et reposant sur des règles de génération de test (131), le test automatisé étant généré sur la base d'au moins un élément parmi : la tâche qui est réalisée par l'utilisateur et des informations demandées par l'utilisateur ;
la réception (240) d'un résultat du test automatisé qui a été réalisé par l'utilisateur, l'analyse des résultats reçus et la détermination de droits d'accès pour la tâche conformément à l'analyse ; et
la réalisation (250) de la tâche conformément aux droits d'accès déterminés.

2. Procédé (200) selon la revendication 1, comprenant en outre : le ré-apprentissage (260) du modèle utilisé pour la détermination du niveau de danger de tâche sur la base de : la tâche qui a été réalisée après que l'utilisateur a passé le test automatisé, les droits d'accès avec lesquels la tâche a été réalisée, et les conséquences sur la sécurité de l'information du dispositif informatique lorsque la tâche est réalisée.

3. Procédé (200) selon l'une quelconque des revendications 1 à 2, comprenant en outre : la correction (270) des règles de génération de test (131), où la correction des règles de génération de test (131) est telle qu'une probabilité de réussite, par l'utilisateur du dispositif informatique, du test automatisé généré sur la base des règles de génération de test (131) corrigées est supérieure à une probabilité de réussite, par l'utilisateur du dispositif informatique, du test automatisé généré sur la base des règles de génération de test (131) avant d'être corrigées.

4. Procédé (200) selon l'une quelconque des revendications 1 à 3, dans lequel le niveau de menace de la tâche pour le dispositif informatique est une valeur numérique caractérisant la probabilité de nuire à la sécurité de l'information du dispositif informatique en réalisant la tâche, la probabilité étant calculée sur la base des données collectées caractérisant la tâche, et une similitude de la tâche avec au moins une tâche précédemment spécifiée pour laquelle un niveau de menace pour le dispositif informatique a été précédemment déterminé.

5. Procédé (200) selon l'une quelconque des revendications 1 à 4, dans lequel plus le niveau de menace pour le dispositif informatique est grand, plus la probabilité que la tâche qui est analysée soit un élément d'une cyberattaque ciblée est élevée.

6. Système (100) de réalisation d'une tâche sur un dispositif informatique sur la base de droits d'accès déterminés à partir d'un niveau de danger de la tâche, comprenant :
au moins un processeur configuré pour :

collecter (210), par un collecteur (110), des données caractérisant la tâche de commande du dispositif informatique ;

générer un ou plusieurs gabarits de tâche sur la base des données collectées, où chacun du ou des gabarits de tâche comprend une ou plusieurs tâches **caractérisées par** des paramètres et attributs dans des plages spécifiées, et où les paramètres et attributs comprennent des caractéristiques qui peuvent être utilisées pour comparer des tâches l'une avec l'autre et déterminer un degré de similitude entre des tâches, la comparaison de tâches comprenant la détermination d'actions élémentaires pour chaque tâche, la génération d'un code intermédiaire pour chaque action élémentaire de chaque tâche, la détermination des degrés de similitude parmi les codes intermédiaires générés de chaque tâche ;

déterminer (220), par un évaluateur de menace (120), un niveau de danger de tâche en utilisant un modèle pour déterminer le niveau de danger de tâche sur la base du ou des gabarits de tâche générés, le niveau de danger de tâche caractérisant un niveau de menace de la tâche pour la sécurité d'une information du dispositif informatique si la tâche est réalisée, et le niveau de danger de tâche étant déterminé sur la base des degrés déterminés de similitude entre des tâches ;

générer (230), par un générateur de test (130), un test automatisé pour déterminer si la tâche a été demandée par un utilisateur humain du dispositif informatique ou par une machine, le test automatisé dépendant du niveau de danger de tâche déterminé et reposant sur des règles de génération de test, le test automatisé étant généré sur la base d'au moins un élément parmi : la tâche qui est réalisée par l'utilisateur et les informations qui sont demandées par l'utilisateur ;

par un analyseur (140), recevoir (240) un résultat du test automatisé qui a été réalisé par l'utilisateur, analyser les résultats reçus et déterminer des droits d'accès pour la tâche conformément à l'analyse ; et

réaliser (250), par l'analyseur (140), la tâche conformément aux droits d'accès déterminés (140).

7. Système (100) selon la revendication 6, le processeur, au moins au nombre de un, étant configuré en outre pour :
le ré-apprentissage (260), par un ré-entraîneur de modèle (150), du modèle utilisé pour la détermination du niveau de danger de tâche sur la base de : la tâche qui a été réalisée après que l'utilisateur a passé le test automatisé, les droits d'accès avec lesquels la tâche a été réalisée, et les conséquences sur la sécurité de l'information du dispositif informatique lorsque la tâche est réalisée.

8. Système (100) selon l'une quelconque des revendications 6 à 7, le processeur, au moins au nombre de un, étant configuré en outre pour : corriger (270), par un correcteur de règles (160), les règles de génération de test (131), où la correction des règles de génération de test (131) est telle qu'une probabilité de réussite, par l'utilisateur du dispositif informatique, du test automatisé généré sur la base des règles de génération de test (131) corrigées est supérieure à une probabilité de réussite, par l'utilisateur du dispositif informatique, du test automatisé généré sur la base des règles de génération de test (131) avant d'être corrigées.

9. Système (100) selon l'une quelconque des revendications 6 à 8, dans lequel le niveau de menace de la tâche pour le dispositif informatique est une valeur numérique caractérisant la probabilité de nuire à la sécurité de l'information du dispositif informatique en réalisant la tâche, la probabilité étant calculée sur la base des données collectées caractérisant la tâche, et une similitude de la tâche avec au moins une tâche précédemment spécifiée pour laquelle un niveau de menace pour le dispositif informatique a été précédemment déterminé.

10. Système (100) selon l'une quelconque des revendications 6 à 9, dans lequel plus le niveau de menace pour le dispositif informatique est grand, plus la probabilité que la tâche qui est analysée soit un élément d'une cyberattaque ciblée est élevée.

**100**

Task to be performed — **101**

Collector — **110**

Task template Generator — **170**

Threat Assesser — **120**

Task template database — **121**

Model Re-trainer (trainer) — **150**

Test Generator — **130**

Test generating rules — **131**

Rules corrector — **160**

Analyzer — **140**

Access rights — **141**

Task performed

**Fig. 1**

**200**

**201**

Start

Gather data characterizing a task for control of the computing device — 210

Determine a task danger level using a model for determining the task danger level based on the gathered data — 220

Generate an automated test — 230

Receive a result of the automated test having being performed by the user, analyze the received results, and determine access rights for the task in accordance with the analysis — 240

Perform the task in accordance with the determined access rights — 250

Retrain the model — 260

Correct the test generating rules — 270

Generate task templates — 280

## Fig. 2

**Fig. 3**

| | | |
|---|---|---|
| system memory | | **22** |

ROM | **24**

BIOS | **26**

RAM | **25**

operating system **35**

applications **37**

other program modules **38**

program data **39**

processor **21**

network interface **51**

system bus **23**

storage interface **32**

peripheral interface **46**

output interface **48**

non-removable storage **28**

removable storage **27**

input device(s) **40**

display device(s) **47**

local-area network **50**

remote computer(s) **49**

| operating system **35** | applications **37** | other program modules **38** | program data **39** |

## Fig. 4

EP 3 694 176 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015339477 A1
- US 2017078319 A1
- US 9348981 B1
- US 2013276125 A1